# EUROPEAN PATENT SPECIFICATION

(11) **EP 2 678 144 B1**
(45) Date of publication and mention of the grant of the patent: **18.03.2015**
(21) Application number: 12709366.4
(22) Date of filing: 20.02.2012
(51) Int. Cl.: B29C 49/06, B29C 45/72, B29C 45/04

(54) **TRANSFERRING DEVICE FOR TRANSFERRING MOULDED PARTS APPLICABLE TO PLASTIC INJECTION MOULDS**
ÜBERTRAGUNGSVORRICHTUNG ZUR ÜBERTRAGUNG VON FORMTEILEN FÜR KUNSTSTOFF-SPRITZGIESSFORMEN
DISPOSITIF DE TRANSFERT POUR PIECES MOULEES CONVENANT POUR DES MOULES D'INJECTION DE MATIERES PLASTIQUES

(30) Priority: 22.02.2011 ES 201100167 U
(43) Date of publication of application: 01.01.2014
(73) Proprietor: Molmasa Aplicaciones Técnicas, S.L., 08110 Montcada i Reixac (Barcelona) (ES)
(72) Inventor: ATANCE ORDEN, Angel, 08110 Montcada i Reixac (Barcelona) (ES)
(74) Representative: Juncosa Miro, Jaime
(86) International application number: PCT/IB2012/000294
(87) International publication number: WO 2012/114177

(56) References cited:
- WO-A1-2005/009718
- US-A- 5 470 221
- US-A- 5 501 589

## Description

### Field of the Art

The present invention relates to a transferring device for transferring moulded parts having application in combined cycle plastic injection moulds, i.e., in those plastic injection moulds in which a moulded part remains inside the mould for more than one cycle, be it a bi-injection mould in which the parts are formed by injecting a first layer into a cavity and subsequently over-injecting a second layer in another cavity, an injection-blow mould in which the parts are formed by injecting a preform into a cavity and subsequently blowing the preform in another cavity, an injection-post-cooling mould in which the part is formed by injecting into a cavity and subsequently cooling in a second cavity, or any other application in which the moulded part needs to be processed in several steps within the mould, having to be shifted from a first position where a first operation is performed to a second position where a second operation is performed, before finally being ejected out of the mould.

### Background of the Invention

Several part transferring systems are known, which are used in the production of combined injection moulds, the most common being the following:
Rotary transfer: The parts moulded in a first step in a first position of the mould are transferred by means of rotating a rotary plate to a second position of the mould where a subsequent operation is performed, be it overmoulding, blowing, or another operation. This rotary transfer device allows performing cycles having 2 steps, 3 steps, etc., but it has several drawbacks. One drawback is that since the rotation movement must be inscribed inside the plate of the injection machine, which is generally limited by four columns, the number of cavities of the mould for a specific machine size is limited.
Robot-mediated transfer: The parts moulded in a first step in a first position of the mould are removed by means of a robot external to the mould and are transferred by the robot to a second position of the mould where the next step will be performed. A drawback of this robot-mediated system is the high cost of the robot, which depending on the total value of the mould and the machine, make the system unviable.
Linear transfer: The parts moulded in a first step in a first position of the mould remain on the cores when they are removed and are transferred by a linear movement of the plate which carries the same cores to a second position of the mould where the next step will be performed. International patent applications WO 2005009718 A1, WO 2006072646 A1 and WO 2007090904 A1, all of them belonging to the inventor of the present invention, describe moulds provided with a linear transferring device for transferring plastic parts of the type described.

The linear transferring devices described in the mentioned international patent applications are fully operative. Nevertheless, it has been found that it can be improved in terms of simplifying the side slides and the ejection means.

### Disclosure of the Invention

The transferring device for transferring moulded parts of the present invention is applicable to multiple cycle plastic injection moulds with linear transfer and is particularly aimed at transferring those plastic parts which, due to their configuration, in order to be moulded need mould portions provided with a transverse movement perpendicular to a longitudinal opening-closing movement of the mould besides mould portions provided with a relative frontal opening-closing movement in said longitudinal direction. A very important example of these plastic parts is that of preforms which are moulded hollow bodies made of plastic material, usually polyethylene terephthalate (PET), although they can be made of other plastic resins, and which are used for producing bottles and other plastic containers by means of a subsequent reheating and stretch blowing process.

The mentioned preforms have a hollow cylindrical body with a hemispherical closed bottom which once stretch blown will form the body of the container, and an open end which is practically not deformed during stretch blowing and which will form the neck and mouth of the container. In an outer surface adjacent to said open end, the preform has a screw threading or another configuration formed for closing the container. This area for screw threading or the like is formed by half-moulds provided with a transverse opening-closing movement, called slides, and cannot be frontally demoulded directly like the rest of the preform, therefore it needs to be previously freed by a transverse opening movement of the slides.

Preform production is very widespread and it is a type of repetitive plastic part produced in large amounts.

The present transferring device for transferring moulded parts makes use of a space provided by the opening movement of the slides in a second transverse direction, which is perpendicular to a longitudinal direction for opening-closing the mould, for transferring cores of the mould and the moulded parts inserted thereon, along the length of a slot open in an ejecting plate supporting the slides in a first transverse direction, which is perpendicular to said second transverse direction for opening-closing the slides. Therefore the slides, once opened, leave said slot cleared and the cores having the moulded parts have the freedom to move along the length of the slot.

Thus, the moulded part can be removed from a first cavity of the mould by a frontal movement of the corresponding core in a longitudinal opening direction, then transferred from a first position facing said first cavity to a second position facing a second cavity by moving the core in the first transverse direction along the length of the slot, and finally inserted in said a second cavity by a frontal closing movement of the core in the longitudinal direction, where a second process such as an additional cooling process, an outer plastic layer overmoulding process, a stretch blowing process, or any other process will take place.

Once this second process is performed, the core can optionally perform a new transfer of the moulded part towards a third position where a third process will be performed, and so on and so forth with the maximum dimension of the mould being the only limitation.

Once all the steps of a process in consecutive positions, whether two, three or more positions, are completed, the subsequent transfer movement of the core returns the moulded part to its first original position in which the moulded part will be ejected from the core by an ejection movement of the slide holder plate transmitted by the injection machine.

Optionally, in those cases where it is necessary due to the particular configuration of the moulded part, there is arranged around each core a tubular ejecting element which has a free transfer movement along the length of the open slot in the ejecting plate, but which is driven by this ejecting plate in both forward and backward frontal ejection direction. In another alternative embodiment, the moulded part is directly ejected by the ejecting plate, for which reason these ejecting elements can be omitted. Using or not using these tubular ejecting elements depends on each application of the system.

In conventional plastic injection moulds the side slides are generally placed aligned in pairs of slide holder bars serving for transmitting the opening and closing movements to all the slides.

In a basic embodiment of the transferring device for transferring moulded parts of the present invention applicable to a two-step plastic injection mould, a single pair of slides has a number n of pairs of half-moulds located at first step sites which are alternated with a number n+1 of second step sites in which there are no half-moulds such that the slides include a row of a number 2n+1 of alternating first and second step sites where the end positions are second step sites without half-moulds. If the first step site is called A and the second step site is called B, the assembly sequence along the slides is B - A - B - A - ...B, with the half-moulds located at the first step sites A.

In a particular embodiment the operation to be performed in the first step is the injection of a first layer of the preform and the operation to be performed in the second step is the over-injection of a second layer of the preform. If the neck area of the preform is to be formed in the first layer, the half-moulds will be located at first step sites A with a B - A - B - A - ...B sequence, and if the neck area of the preform is to be formed in the second layer, the half-moulds will be located at second step sites B with a reverse A - B - A - B - ...A sequence.

In a more complex embodiment of the transferring device for transferring moulded parts of the present invention applicable, for example, to a three-step plastic injection mould, the different sites include first step sites A, second step sites B, and third step sites C, and the sequence is A - B - C - A - B - C - ...A - B, with the half-moulds located at any of the three sites A, B, C depending on the operations performed in each step. Following the same pattern the transferring device for transferring moulded parts of the present invention can be adapted to four-step and more than four-step plastic injection moulds.

The elements supporting the moulded parts during transfer are the cores which mould the inner surface of the moulded part. In the device of the present invention there is a number 2n of cores, with n being the number of half-moulds in the slide when the plastic injection mould is a two-step mould, or a number 3n of cores when the plastic injection mould is a three-step mould, and so on and so forth.

In all the cases it is of interest that the ejecting element (when present) only acts in the final step, and that its position is the starting position, i.e. the central position, at the time of being actuated since in this position the ejection force is centered with respect to the surface of the plate of the machine, and there are no torsion stresses. This is achieved by means of several configurations made in the ejecting plate, which only transmit the ejection movement to those ejecting elements which are in that position, leaving the rest free.

A first exemplary application of the transferring device for transferring moulded parts of the present invention consists of a plastic injection mould for preforms, which due to their considerable thickness (generally between 3 and 4 mm) need a longer cooling time before being ejected. In this mould the preforms are injected in a first cycle and after opening the mould the newly injected preforms are transferred by the cores to a second position where they will remain during a new cycle during which time the cores supporting them continue cooling as a result of an inner cooling system of the core (normally by means of a forced and cooled fluid), and the outer surface thereof can further be additionally cooled by means of a cooling cavity (different from the injection cavity) or by two cooling half-cavities which can be assembled in the same slides in an alternating manner with respect to the half-moulds.

These cooling half-cavities, which are also provided with an opening and closing movement as they are assembled in the same slides as the half-moulds, are perfectly adapted to the outer surface of the preform and can therefore transfer additional outer cooling thereto by conduction, since they can be made of material with a high thermal conductivity such as aluminium or a copper alloy. The cooling half-cavities can also have an inner cooling circuit, for example by means of a forced and cooled fluid.

There are heavy and large preforms used for producing large containers, such as for example water drums between 10 and 20 litres (5 gallons), in which the wall is extremely thick, between 5 and 9 mm, needing a very long production cycle times between 60 and 180 seconds. In the moulds for producing these large preforms using moulds of this type but with a greater number of cooling stations may be interest, since the cycle time is thus divided. The plastic injection mould can, for example, comprise three steps: a first step of injection followed by two steps of cooling, with which productivity improvement is very significant.

A second exemplary application of the transferring device for transferring moulded parts of the present invention is an injection mould for multilayer preform, be it two, three or more layers. These preforms are used to improve the basic properties of the plastic material, usually polyethylene terephthalate (PET), by means of inserting inner layers made of materials with oxygen or light barrier property, or to improve their appearance by means of adding layers of different colours, or to reduce the cost by means of adding an outer layer made of a recycled plastic material, such as recycled polyethylene terephthalate (RPET). In all of these cases a first plastic layer can be injected on the cores in first cavities, and after opening the mould and the slides, the cores with the first layer thereon can be shifted to a second position where upon closing the mould the cores will be inserted in second injection cavities where a second plastic layer will be injected, and the preforms will be subsequently ejected or they will continue the process towards the formation of a third layer, etc.

In a third exemplary application of the transferring device for transferring moulded parts of the present invention, the first step A to which the moulded parts or preforms are subjected is a blowing step, in which pressurized air is used to insufflate the inside of the preform, the preform expands taking the shape of the blowing cavity corresponding to a blown container, be it a bottle, can, jar, or any other shape which can be obtained by this known method. The residual heat which the preform still has is thus used, which heat is due to the recent injection step which needs a temperature of the thermoplastic material greater than that of the melting temperature, and which after this step still conserves a temperature sufficient for achieving its thermoplastic deformation upon being subjected to blowing. Blowing process is widely known, and the present device only provides the transferring device for transferring the preforms from the injection cavities to the blowing cavities, and the subsequent return transfer to the first (injection) position where the finished container is ejected as the ejecting plate moves forward, as a result of the ejecting element which is arranged around the corresponding core.

It is important to mention that in the blowing step the two halves of the blowing cavity can be assembled in the two slides which serve for holding the injection half-moulds. Therefore the opening and closing movement of the slides is made use of both for the injection half-moulds and for the blowing half-moulds. In other applications of the system the blowing cavity may not need these half-moulds, in which case the blowing cavities can be arranged alternating with the injection cavities of the preforms.

### Brief Description of the Drawings

The foregoing and other features and advantages will be more fully understood from the following detailed description of an embodiment with reference to the attached drawings, in which:
Figure 1 is a perspective view of a transferring device for transferring moulded parts applicable to a plastic injection mould according to an embodiment of the present invention in a closed position;
Figures 2 to 6 are perspective views of the transferring device of Figure 1 illustrating a sequence of steps in a working cycle where one of the two slides of the device has been omitted for greater clarity of the drawing;
Figure 7 is a cross-section view of a transferring device for transferring moulded parts applicable to a plastic injection mould according to another embodiment of the present invention in an open slide position; and
Figure 8 is a cross-section view of the transferring device of Figure 7 in a closed slide position.

### Detailed Description of an Embodiment

First referring to the drawings in general, there is shown a transferring device for transferring moulded parts according to an embodiment of the present invention adapted to work with a dual cycle plastic injection mould, in which two operations are performed for producing preforms P or moulded parts. In this example the plastic injection mould is prepared for producing single layer preforms P including a first step of injection and a second step of cooling. To that end a static cavity block of the mould (not shown) comprises a row of five cavities arranged as follows: two injection cavities placed among three cooling cavities, aligned in a first transverse direction DT1 which is perpendicular to a longitudinal opening and closing direction DL of the mould.

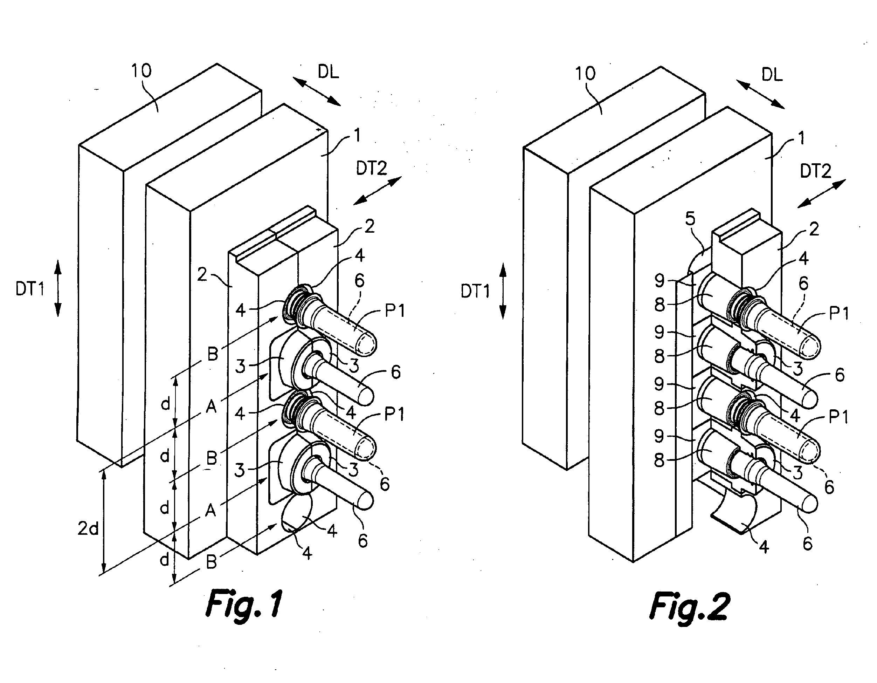

The transferring device comprises an ejecting plate 1 having an elongated slot 5 in said first transverse direction DT1. On this ejecting plate 1 and at both sides of said slot 5 there are supported a pair of slides 2 having five sites (Figure 1): two first step sites A facing the two injection cavities (not shown), placed among three second step sites B facing the three cooling cavities (not shown). The five sites A, B are separated from one another by a distance d in the first longitudinal direction DT1 equivalent to the separation distance between one another of the five cavities (not shown).

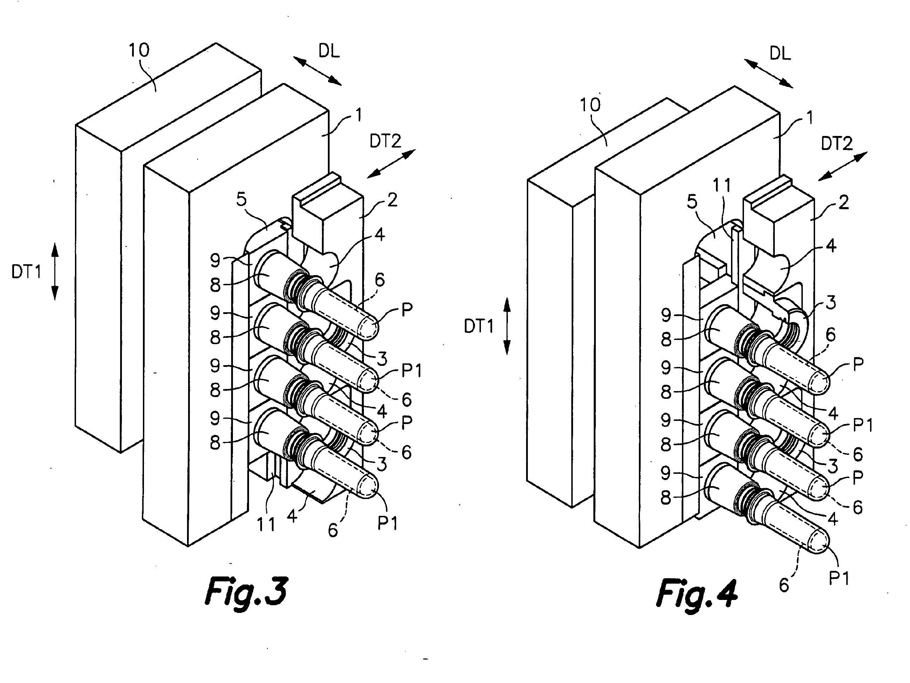

The slides 2 have at each of the first step sites A a pair of half-moulds 3 forming an area of the preform P corresponding to the neck of the container, with a screw threading or another closing configuration, and they have simple notches 4 at the second step sites B. The slides 2 are operated by conventional operating means for moving said half-moulds 3 in a second transverse direction DT2 perpendicular to said first transverse direction DTI between open half-mould positions (see Figures 3, 4 and 5) and closed half-mould positions (Figures 1, 2 and 6). In Figures 2-6 one of the slides 2 has been omitted for greater clarity of the drawing.

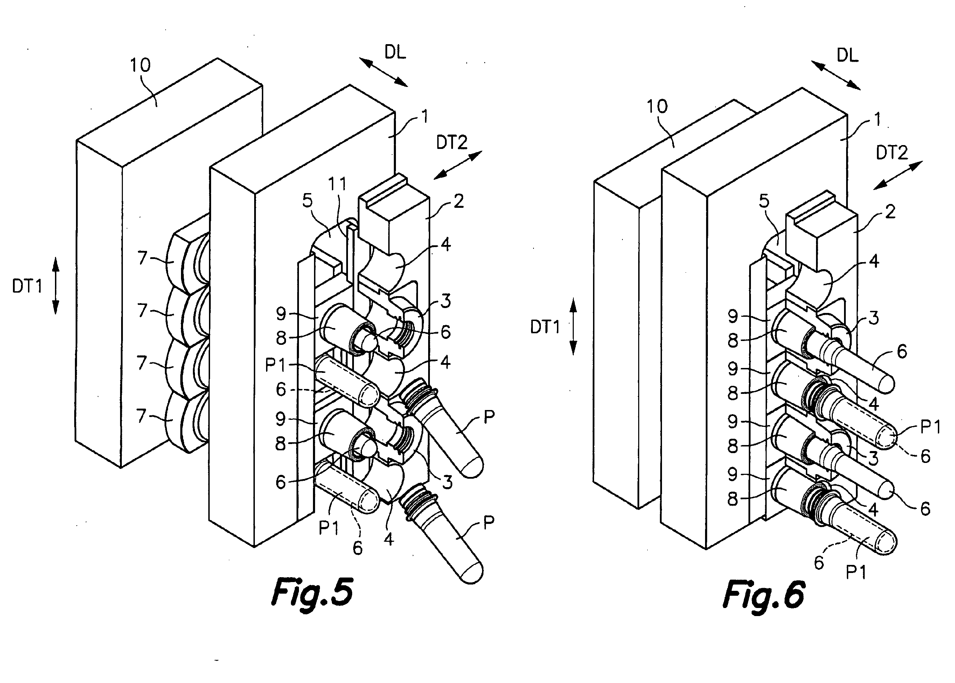

A row of four cores 6 having respective bases 7 (Figure 5) connected to a core-carrying plate 10 is inserted through said slot 5. The cores 6 are separated from one another in the first transverse direction DT1 by distance d. The core-carrying plate 10 is operated by conventional operating means for transferring said cores 6 in the mentioned longitudinal direction DL between an open mould position in which the cores 6 are removed from the injection cavities (not shown) and a closed mould position in which the cores are inserted in four of the five injection cavities.

Furthermore, the core-carrying plate 10 is operated by conventional operating means for transferring the cores 6 in the first transverse direction DT1 between a first operating position (Figures 1, 2 and 3) in which the four cores 6 are aligned with a group of four of the five cavities (not shown) including the cooling cavity located at one of the ends of the row, and a second operating position (Figures 4, 5 and 6) in which the four cores 6 are aligned with another group of four of the five cavities (not shown) including the cooling cavity located at the other end of the row.

The slot 5 of the ejecting plate 1 is sized to allow transferring the cores 6 along the length thereof between the first and second operating positions. The notches 4 formed in the slides 2 only serve to prevent the slides 2 from interfering with the cores 6 when the slides 2 are in the closed half-mould position.

The preforms P remain on the cores 6 when the latter are removed from the injection cavities, such that the preforms P are transferred by the cores 6 between said first and second operating positions.

The ejecting plate 1 is operated by conventional operating means for performing movements in the longitudinal direction DL together with the core-carrying plate 10 between said open mould positions and closed mould positions and further an ejection movement in the longitudinal direction DL with respect to the core-carrying plate 10 when the same is in the open mould position for ejecting the finished moulded parts P only from the two cores 6 which have been removed from the cooling cavities.

Around each core 6 there is arranged a tubular ejecting element 8 (visible in Figures 2 to 6 as a result of the omission of one of the slides 2), which ejecting element 8 has a base 9 coupled to the slot 5 of the ejecting plate 1 by a guide arrangement 11 (Figures 3, 4 and 5). Therefore each ejecting element 8 is provided with a free transfer movement in the first transverse direction DT1 along the length of the open slot 5 in the ejecting plate 1, but which is driven by this ejecting plate 1 in the longitudinal direction DL in both the forward and backward ejection movements, as a result of the configuration of said guide arrangement and only when the corresponding core 6 is at a first step site A.

With respect to Figures 2 to 6 an operating sequence of the transferring device for transferring moulded parts of the present invention according to the embodiment shown in Figure 1 is described below.

Figure 2 (which is similar to Figure 1 but with one slide omitted for greater clarity of the drawing) illustrates the transferring device in a situation in which the ejecting plate 1 and the core-carrying plate 10 are in the open mould position, and the slides 2 are in the closed half-mould position. Furthermore, the core-carrying plate 10 and the cores 6 are in the first operating position, such that the notches 4 located at one of the second step sites B of the slides 2, at a lower end of the row, are clear.

Two of the alternating cores 6 which have been removed from the injection cavities (not shown) have respective newly injected preforms P1 inserted thereon, whereas the other two cores 6 which have been removed from the cooling cavities (not shown), are bare because the finished and cooled preforms P have been ejected therefrom. By maintaining this position, the ejecting plate 1 and the core-carrying plate 10 move to the closed mould position to simultaneously perform an injection operation on the bare cores 6 in the injection cavities and a cooling operation for cooling the newly injected preforms P1, which have been injected in the previous cycle, in the cooling cavities. The injection operation includes the formation of the neck area of the preform by means of the half-moulds 3.

Figure 3 shows a subsequent situation in which the ejecting plate 1 and the core-carrying plate 10 have again moved to the open mould position after the injection operation, carrying finished and cooled preforms P on two of the alternating cores 6 and newly injected preforms P1 on the other two alternating cores 6, and in which the slides 2 have moved to the open slide position.

Figure 4 shows the next step consisting of shifting the core-carrying plate 10 and the cores 6 in the first transverse direction DT1 and along the length of the slot 5 of the ejecting plate 1 from the first operating position to the second operating position, such that the notches 4 that are now located at the other of the second step sites B of the slides 2 at an upper end of the row are those that are clear. With this movement the finished and cooled preforms P and the newly injected preforms P1 are transferred by the cores 6 from the first operating position to the second operating position.

As shown in Figure 5, the next step consists of the operation for ejecting the finished preforms P. To that end the ejecting plate 1 performs an ejection movement being separated from the core-carrying plate 10 in the longitudinal direction DL by a distance sufficient for assuring that the ejecting elements 8 eject the finished preforms P from the corresponding alternating cores 6. The mentioned guide arrangement 11 between the bases 9 of the ejecting elements 8 and the slot 5 of the ejecting plate 1 is configured such that the ejecting plate 1 only transmits the ejection movement to those ejecting elements 8 which are at the first step sites A leaving the rest free.

Figure 6 shows a subsequent situation in which after the ejection, the ejecting plate 1 has returned to its position adjacent to the core-carrying plate 10 and the slides 2 have again moved to their closed slide position. It is observed that the situation of Figure 6 is opposite of that of Figure 2. In Figure 6 the core-carrying plate 10 and the cores 6 are at the second operating position and the notches 4 located at the second step site B at the upper end of the slides 2 are clear. Furthermore two of the alternating cores 6 have respective newly injected preforms P1 inserted thereon whereas the other two cores 6 are now bare because the finished and cooled preforms P have been ejected therefrom.

From the situation shown in Figure 6 the ejecting plate 1 and core-carrying plate 10 can move to the closed mould position to perform a subsequent injection operation, and they can then move again to the open mould position to perform subsequent transfer and ejection operations, until returning again to the situation of Figure 2, and so on and so forth.

Although the transferring device for transferring moulded parts has been described with respect to the Figures 1 to 6 including four cores and two operating positions for a dual cycle plastic injection mould, the device of the present invention can be applied to plastic injection moulds of any number of cycles, including a different number of cores. Therefore the transferring device for transferring moulded parts can be generalized from the structure shown in Figures 1 to 6, with a number n of pairs of half-moulds 3 supported in a pair of slides 2 (where n is an integer equal to or greater than 1), and a row of a number mn of cores 6 (where m is an integer equal to or greater than 2 and represents the number of operations or cycles of the mould).

The slides have a number mn+(m-1) of sites and the cores 6 are transferred between a number m of operating positions in each of which a different fraction 1/m of the cores 6 are arranged with respect to the half-moulds 3. The cores 6 are sequentially transferred from one operating position to another from a first operating position to a final operating position and the cores 6 returned directly from the final operating position to the first operating position. The finished moulded parts P are ejected from a number n of alternating cores 6 in each cycle.

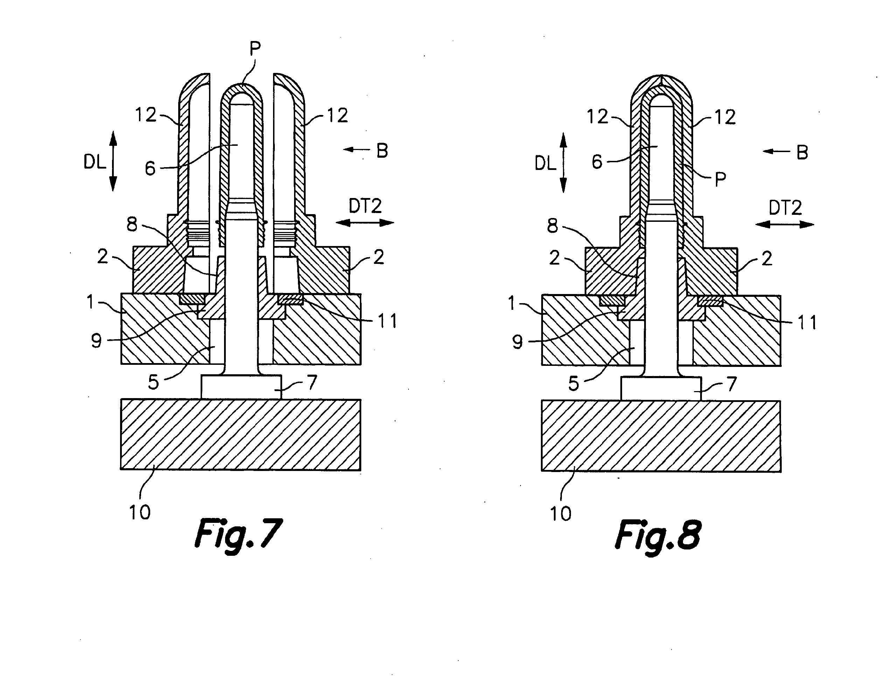

With respect to Figures 7 and 8 another embodiment of the transferring device for transferring moulded parts of the present invention is described, which is basically the same as the embodiment described above with respect to Figures 1 to 6, where the slides 2 have half-moulds at the first step sites A. Nevertheless the transferring device of Figures 7 and 8 is applied to an injection mould not including cooling cavities in the mentioned static cavity block of the mould. In contrast, in the transferring device of Figures 7 and 8, in addition to said half-moulds at the first step sites A, the slides 2 have pairs of cooling half-cavities 12 at the second step sites B.

The mentioned cooling half-cavities 12 have inner surfaces which are precisely adapted to the outer surface of the preform, and are made of a material with a high thermal conductivity, such as, for example, aluminium or a copper alloy to assure a good heat dissipation and to help cooling the preforms. Optionally, the cooling half-cavities 12 can have an inner cooling circuit (not shown), for example, by means of a forced and cooled fluid to increase the cooling capacity.

Therefore when the slides 2 are put in the closed half-mould position, the half-moulds 3 close on two of the bare cores 6 to perform an injection operation and the cooling half-cavities 12 close on the newly injected preforms P1 on the other two cores 6 to perform the cooling operation at the same time as the injection operation is performed on the bare cores 6.

It will be understood that the cooling half-cavities 12 could also be replaced by blowing half-cavities (not shown) fixed to the slides 2 at the second step sites B to perform a blowing operation of the newly injected and still hot preforms P1 at the same time as the injection operation is performed on the bare cores 6. The blowing half-cavities have inner surfaces which mould the outer surface of the container obtained by blowing the newly injected preform P1. The slides 2 can generally have half-cavities at the second step sites B adapted for another type of additional operation which would be obvious for a person skilled in the art.

Although the transferring device for transferring moulded parts has been described with respect to Figures 1 to 8 applied to a plastic injection mould for producing single layer preforms P, it will be understood that it can alternatively be applied to the production of preforms having two or more layers, or of many other moulded parts other than preforms.

Modifications and variations to the embodiment shown and described will readily occur to a person skilled in the art without departing from the scope of the present invention as defined in the claims attached.

## Claims

1. A transferring device for transferring moulded parts applicable to plastic injection moulds of the type comprising:
a row of a number n of pairs of half-moulds (3), wherein n is an integer equal to or greater than 1, which half-moulds (3), if n is greater than 1, are separated in a first transverse direction (DT1) perpendicular to a longitudinal direction (LD) by a distance md, wherein m is an integer equal to or greater than 2, and supported on slides (2) operated for moving said half-moulds (3) in a second transverse direction (DT2) perpendicular to said first transverse direction (DT1) between open half-mould positions and closed half-mould positions;
a row of a number mn of cores (6) separated in the first transverse direction (DT1) by said distance d and supported in a core-carrying plate (10) operated for transferring said cores (6) in said longitudinal direction (LD) between open mould position and closed mould position, and the cores (6) are operated by operating means for being transferred with respect to said core-carrying plate (10) in the first transverse direction (DT1) between a number m of operating positions in each of which a different fraction 1/m of alternating cores of the cores (6) are arranged in relation with the half-moulds (3),
wherein moulded parts (P1, P) are transferred by the cores (6) between said operating positions,
**characterized in that**:
said slides (2) are supported in an ejecting plate (1) having an elongated slot (5) in the first transverse direction (DT1);
the cores (6) are inserted through said slot (5); and
the slot (5) is sized to allow transferring the cores (6) on the core-carrying plate (10) along the length thereof between the different operating positions.

2. The transferring device according to claim 1, **characterized in that** said ejecting plate (1) is operated by operating means for performing movements in the longitudinal direction (LD) together with said core-carrying plate (10) between said open mould position and closed mould position and an ejection movement in the longitudinal direction (LD) with respect to the core-carrying plate (10) when the same is in the open mould position for ejecting the finished moulded parts (P) from a number n of cores (6).

3. The transferring device according to claim 2, **characterized in that** around each core (6) there is arranged an ejecting element (8) having a tubular configuration which is coupled to , the ejecting plate (1) by a guide arrangement (11) such that it can slide freely along the slot (5) of the ejecting plate (1) together with the core (6) and is driven by the ejecting plate (1) when the same performs said ejection movement.

4. The transferring device according to any one of claims 1 to 3, **characterized in that** when m is equal to 2, said operating means move the cores (6) alternately between a first operating position and a second operating position and the ejecting plate (1) performs the ejection movement in both first and second operating positions.

5. The transferring device according to any one of claims 1 to 3, **characterized in that** when m is greater than 2, said operating means move the cores (6) sequentially from one operating position to another from a first operating position to a final operating position and later they return the cores (6) directly from said final operating position to said first operating position, and the ejecting plate (1) performs the ejection movement in each of the operating positions.

6. The transferring device according to any one of the preceding claims, **characterized in that** in addition to the number n of pairs of half-moulds (3), the slides (2) support an a number n+1 of pairs of half-cavities for additional operation aligned and alternated with said pairs of half-moulds (3), and said pairs of half-cavities for additional operation close on newly injected moulded parts (PI) arranged on a fraction 1/m of alternating cores of the cores (6) when the slides (2) move to the closed half-mould position.

7. The transferring device according to claim 6, **characterized in that** said pairs of half-cavities for additional operation are pairs of cooling half-cavities (12) having inner surfaces which are adapted precisely to the outer surface of said newly injected moulded parts (PI).

8. The transferring device according to claim 6, **characterized in that** said pairs of half-cavities for additional operation are pairs of blowing half-cavities having inner surfaces which mould the outer surface of hollow articles obtained by blowing said newly injected moulded parts (PI).

## Patentansprüche

1. Übertragungsvorrichtung zur Übertragung von Formteilen für Kunststoff-Spritzgießformen der Art umfassend:
eine Reihe einer Anzahl n von Paaren von Formhälften (3), wobei n eine ganze Zahl gleich oder größer als 1 ist, wobei die Formhälften (3), wenn n größer als 1 ist, in einer ersten transversalen Richtung (DT1), welche zu einer longitudinalen Richtung (LD) senkrecht ist, um einen Abstand md getrennt sind, wobei m eine ganze Zahl gleich oder größer als 2 ist, und welche auf Schiebern (2) getragen sind, welche betätigt werden, um die genannten Formhälften (3) in einer zweiten transversalen Richtung (DT2), welche zur genannten ersten transversalen Richtung (DT1) senkrecht ist, zwischen Positionen mit offenen Formhälften und mit geschlossenen Formhälften zu bewegen;
eine Reihe einer Anzahl mn von Stempeln (6), welche in der ersten transversalen Richtung (DT1) um den genannten Abstand d getrennt sind und auf einer Stempelträgerplatte (10) getragen sind, welche betätigt wird, um die genannten Stempel (6) in der genannten longitudinalen Richtung (LD) zwischen einer Position mit offener Form und einer Position mit geschlossener Form zu übertragen, und wobei die Stempel (6) mit Betätigungsmitteln betätigt werden, um in Bezug auf die genannte Stempelträgerplatte (10) in der ersten transversalen Richtung (DT1) zwischen einer Anzahl m von Betätigungspositionen übertragen zu werden, wobei in jeder ein unterschiedlicher Bruchteil 1/m von abwechselnden Stempeln der Stempel (6) in Bezug auf die Formhälften (3) angeordnet werden,
wobei die Formteile (P1, P) von den Stempeln (6) zwischen den genannten Betätigungspositionen übertragen werden,
**dadurch gekennzeichnet, dass**:
die genannten Schieber (2) auf einer Ausstoßplatte (1) getragen sind, welche einen länglichen Schlitz (5) in der ersten transversalen Richtung (DT1) aufweist;
die Stempel (6) durch den genannten Schlitz (5) eingeführt werden; und
der Schlitz (5) dazu dimensioniert ist, die Übertragung der Stempel (6) auf der Stempelträgerplatte (10) entlang derselben zwischen den unterschiedlichen Betätigungspositionen zu ermöglichen.

2. Übertragungsvorrichtung nach Anspruch 1, **dadurch gekennzeichnet, dass** die genannte Ausstoßplatte (1) mit Betätigungsmitteln betätigt wird, um Bewegungen in der longitudinalen Richtung (LD) zusammen mit der genannten Stempelträgerplatte (10) zwischen der genannten Position mit offener Form und der genannten Position mit geschlossener Form und eine Ausstoßbewegung in der longitudinalen Richtung (LD) in Bezug auf die Stempelträgerplatte (10) durchzuführen, wenn sich diese in der Position mit offener Form befindet, um die gefertigten Formteile (P) von einer Anzahl n von Stempeln (6) auszustoßen.

3. Übertragungsvorrichtung nach Anspruch 2, **dadurch gekennzeichnet, dass** um jeden Stempel (6) ein Ausstoßelement (8) angeordnet ist, welches eine rohrförmige Ausbildung hat und mit der Ausstoßplatte (1) durch eine Führungsanordnung (11) angekoppelt ist, so dass es sich entlang des Schlitzes (5) der Ausstoßplatte (1) zusammen mit dem Stempel (6) frei verschieben kann und von der Ausstoßplatte (1) mitgenommen wird, wenn diese die genannte Ausstoßbewegung ausführt.

4. Übertragungsvorrichtung nach einem der Ansprüche 1 oder 3, **dadurch gekennzeichnet, dass** wenn m gleich 2 ist, die genannten Betätigungsmittel die Stempel (6) zwischen einer ersten Betätigungsposition und einer zweiten Betätigungsposition abwechselnd bewegen und die Ausstoßplatte (1) die Ausstoßbewegung sowohl in der ersten als auch in der zweiten Betätigungsposition ausführt.

5. Übertragungsvorrichtung nach einem der Ansprüche 1 bis 3, **dadurch gekennzeichnet, dass** wenn m größer als 2 ist, die genannten Betätigungsmittel die Stempel (6) von einer Betätigungsposition zu einer anderen von einer ersten Betätigungsposition zu einer endgültigen Betätigungsposition sequenziell bewegen und später sie die Stempel (6) direkt von der genannten endgültigen Betätigungsposition zur genannten ersten Betätigungsposition zurückbringen, und die Ausstoßplatte (1) führt die Ausstoßbewegung in jeder der Betätigungspositionen aus.

6. Übertragungsvorrichtung nach einem der vorhergehenden Ansprüche, **dadurch gekennzeichnet, dass** zusätzlich zur Anzahl n von Paaren von Formhälften (3), die Schieber (2) eine Anzahl n+1 von Paaren von Hohlraumhälften tragen für eine zusätzliche Betätigung, welche mit den genannten Paaren von Formhälften (3) ausgerichtet sind und sich mit diesen abwechseln, und die genannten Paare von Hohlraumhälften für eine zusätzliche Betätigung schließen sich auf frisch gespritzten Formteilen (P1), welche auf einem Bruchteil 1/m von abwechselnden Stempeln der Stempel (6) angeordnet sind, wenn sich die Schieber (2) zur Position mit geschlossener Formhälfte bewegen.

7. Übertragungsvorrichtung nach Anspruch 6, **dadurch gekennzeichnet, dass** die genannten Paare von Hohlraumhälften für eine zusätzliche Betätigung Paare von Abkühlungshohlraumhälften (12) sind, welche innere Oberflächen haben, die an die äußere Oberfläche der genannten frisch gespritzten Formteilen (P1) exakt angepasst sind.

8. Übertragungsvorrichtung nach Anspruch 6, **dadurch gekennzeichnet, dass** die genannten Paare von Hohlraumhälften für eine zusätzliche Betätigung Paare von Blashohlraumhälften sind, welche innere Oberflächen haben, die die äußere Oberfläche von hohlen Artikeln formen, die durch Blasen der genannten frisch gespritzten Formteilen (P1) erhalten wurden.

## Revendications

1. Un dispositif de transfert pour transférer des pièces moulées applicable à des moules d'injection plastique du genre comportant:
une rangée d'un nombre n de paires de demi-moules (3), dans laquelle n est un entier égal ou supérieur à 1, lesdits demi-moules (3), si n est supérieur à 1, sont séparés dans un premier sens transversal (DTI) perpendiculaire au sens longitudinal (LD) d'une distance md, où m est un entier égal ou supérieur à 2, et supportée sur des glissières (2) fonctionnant pour déplacer ces demi-moules (3) dans un deuxième sens transversal (DT2) perpendiculaire à ce premier sens transversal (DT1) entre les positions de demi-moule ouvert et les positons de demi-moule fermé;
une rangée d'un nombre mn de noyaux (6) séparés dans le premier sens transversal (DT1) de cette distance d et supportée sur une plaque de transfert de noyaux (10) fonctionnant pour transférer ces noyaux (6) dans ce sens longitudinal (LD) entre la position de moule ouvert et la position de moule fermé, et les noyaux (6) sont commandés par des moyens de commande pour être transférés par rapport à cette plaque de transfert de noyaux (10) dans le premier sens transversal (DTI) entre un nombre m de positions de travail dans chacune desquelles une fraction différente l/m de noyaux alternatifs des noyaux (6) sont aménagés par rapport aux demi-moules (3),
où les pièces moulées (P1, P) sont transférées par les noyaux (6) entre ces positions de travail,
**caractérisé en ce que**:
ces glissières (2) sont supportées sur une plaque d'injection (1) ayant une fente allongée (5) dans le premier sens transversal (DTI);
les noyaux (6) sont insérés à travers cette fente (5); et
la fente (5) a une taille permettant de transférer les noyaux (6) sur la plaque de transfert de noyaux (10) tout le long de celle-ci entre les différentes positions de travail.

2. Le dispositif de transfert conformément à la revendication 1, **caractérisé en ce que** cette plaque d'injection (1) est commandée par des moyens de commande pour effectuer des mouvements dans le sens longitudinal (LD) ensemble avec cette plaque de transfert de noyaux (10) entre cette position de moule ouvert et la position de moule fermé et un mouvement d'éjection dans le sens longitudinal (LD) par rapport à la plaque de transfert de noyaux (10) lorsque celui-ci est dans la position de moule ouvert pour éjecter les pièces moulées finies (P) d'un nombre n de noyaux (6).

3. Le dispositif de transfert conformément à la revendication 2, **caractérisé en ce qu'**autour de chaque noyau (6) est aménagé un élément d'éjection (8) ayant une configuration tubulaire qui est couplée à la plaque d'éjection (1) par un dispositif de guidage (11) de sorte qu'il puisse glisser librement le long de la fente (5) de la plaque d'éjection (1) ensemble avec le noyau (6) et il est entraîné par la plaque d'éjection (1) lorsque celle-ci effectue ce mouvement d'éjection.

4. Le dispositif de transfert conformément aux revendications 1 à 3, **caractérisé en ce que**, lorsque m est égal à 2, ces moyens de commande déplacent les noyaux (6) alternativement entre une première position de travail et une deuxième position de travail et la plaque d'éjection (1) effectue le mouvement d'éjection dans les première et deuxième positions de travail.

5. Le dispositif de transfert conformément une quelconque des revendications 1 à 3, **caractérisé en ce que** lorsque m est supérieur à 2, ces moyens de commande déplacent les noyaux (6) séquentiellement d'une position de travail à une autre, d'une première position de travail à une position de travail finale puis, ils retournent les noyaux (6) directement à cette position de travail finale à cette première position de travail et la plaque d'éjection (1) effectue le mouvement d'éjection dans chacune des positions de travail.

6. Le dispositif de transfert conformément à une quelconque des revendications précédentes, **caractérisé en ce qu'**en plus du nombre n de paires de demi-moules (3), les glissières (2) supportent un nombre n+1 de paires de demi-cavités pour une opération complémentaire alignées et alternées avec ces paires de demi-moules (3), et ces paires de demi-cavités pour une opération complémentaire proches aux pièces moulées nouvellement injectées (PI) aménagées sur une fraction l/m de noyaux alternés des noyaux (6) lorsque les glissières (2) se déplacent à la position de demi-moule fermé.

7. La dispositif de transfert conformément à la revendication 6, **caractérisé en ce que** ces paires de demi-cavités pour une opération complémentaire sont des paires de demi-cavités de refroidissement (12) ayant des surfaces intérieures adaptées avec précision à la surface extérieure de ces pièces moulées nouvellement injectées (PI).

8. Le dispositif de transfert conformément à la revendication 6, **caractérisé en ce que** ces paires de demi-cavités pour une opération complémentaire sont des paires de demi-cavités de soufflage ayant des surfaces intérieures moulant la surface extérieure d'articles creux obtenus par soufflage de ces pièces moulées nouvellement injectées (P1).
